# EUROPEAN PATENT APPLICATION

(11) **EP 2 065 971 A1**
(43) Date of publication of application: **03.06.2009**
(21) Application number: 08170067.6
(22) Date of filing: 27.11.2008
(51) Int. Cl.: H01Q 1/24, H01Q 5/00, H01Q 9/40, H01Q 9/42, H01Q 19/28

(54) **Mobile wireless communications device antenna assembly with floating director elements on flexible substrate and related methods**

(30) Priority: 29.11.2007 US 947178
(71) Applicant: Research In Motion Limited, Waterloo, Ontario N2L 3W8 (CA)
(72) Inventor: Man, Ying Tong, Waterloo Ontario N2V 2V8 (CA); Qi, Yihong, St. Agatha Ontario N0B 2L0 (CA); Cooke, Adrian, Kitchener Ontario N2A 4B5 (CA); Bandurska, Krystyna, Waterloo Ontario N2V 2X3 (CA)
(74) Representative: Fennell, Gareth Charles

(57) **Abstract**

A mobile wireless communications device (20) may include a portable housing (24), a circuit board (37) carried by the portable housing (24) and comprising a ground plane (39), and wireless communications circuitry (38) carried by the circuit board (37). The device may also include an antenna assembly (35) carried by the housing (24). The antenna assembly (35) may include a flexible substrate (45), an electrically conductive antenna element (36) on the flexible substrate (45) and connected to the wireless communications circuitry (38) and the ground plane (39), and at least one pair of floating, electrically conductive director elements (30a,30b) on opposite sides of the flexible substrate (45) for directing a beam pattern of the antenna element (36).

## Description

### Field of the Invention

The present invention relates to the field of communications devices, and, more particularly, to mobile wireless communications devices and antennas therefor and related methods.

### Background of the Intention

Cellular communications systems continue to grow in popularity and have become an integral part of both personal and business communications. Cellular telephones allow users to place and receive voice calls most anywhere they travel. Moreover, as cellular telephone technology has increased, so too has the functionality of cellular devices and the different types of devices available to users. For example, many cellular devices now incorporate personal digital assistant (PDA) features such as calendars, address books, task lists, etc. Moreover, such multi-function devices may also allow users to wirelessly send and receive electronic mail (email) messages and access the Internet via a cellular network and/or a wireless local area network (WLAN), for example.

Even so, as the functionality of cellular communications devices continues to increase, so too does the demand for smaller devices which are easier and more convenient for users to carry. One challenge this poses for cellular device manufacturers is designing antennas that provide desired operating characteristics within the relatively limited amount of space available for the antenna.

One approach for reducing phone size is to use flip phones having top and bottom housings connected with a hinge. The housings may be closed when the phone is not in use so that it is more compact and easier for a user to carry. One exemplary antenna system for a flip style cellular phone is described in U.S. Patent No. 6,765,536. In particular, the antenna system includes an external antenna element carried on the top of the lower housing, and a parasitic element carried by the top housing so that when the phone is flipped open the parasitic element is in close proximity to the antenna element. A tuning circuit carried by the lower housing is electrically coupled to the parasitic element. The tuning circuit is variable to adjust the parasitic load on the antenna element to provide variable operating frequencies and bandwidths for the phone.

External cell phone antennas are advantageous in that they are spaced apart from the user's head, which makes it easier for phone manufacturers to comply with applicable specific absorption rate (SAR) requirements, for example. This is because the farther the radiating element of the cell phone antenna system is from the user, the less intense the radiation exposure to the user. Yet, many users prefer internal antennas over external antennas, as external antennas are prone to catch on objects and become damaged, for example. Yet, with the ever increasing trend towards smaller cell phone sizes, for a relatively small phone having an internal antenna, this may place the antenna in relatively close proximity to the user's ear, which may make complying with applicable SAR and/or hearing aid compatibility (HAC) requirements potentially difficult for manufacturers.

One exemplary mobile phone configuration that attempts to address radiation concerns from an internal antenna is set forth in PCT Publication No. WO/2004/021511 A2. The device includes a casing including a first in-built driven antenna element extending a length along a longest side of the casing. Either the portable communication device or the case includes at least one passive beam directive element distanced from and generally extending along at least most of the same length as the first in-built driven antenna element. Because of this, electromagnetic radiation generated by the first in-built driven antenna element is enhanced in a direction away from a side of the casing intended to be facing a user.

Despite the existence of such configurations, further improvements may be desirable in certain applications, particularly where the form factor of the device housing does not provide adequate space for such arrangements.

### Brief Description of the Drawings

FIG. 1 is a perspective view of a mobile wireless communications device in accordance with one aspect adjacent a user's head.

FIG. 2 is a side cutaway view of an embodiment of the mobile wireless communications device of FIG. 1.

FIG. 3 is a rear view of an embodiment of the mobile wireless communications device of FIG. 1 with a battery cover removed.

FIG. 4 is 2D plan view of an embodiment of the antenna assembly of the mobile wireless communications device of FIG. 1.

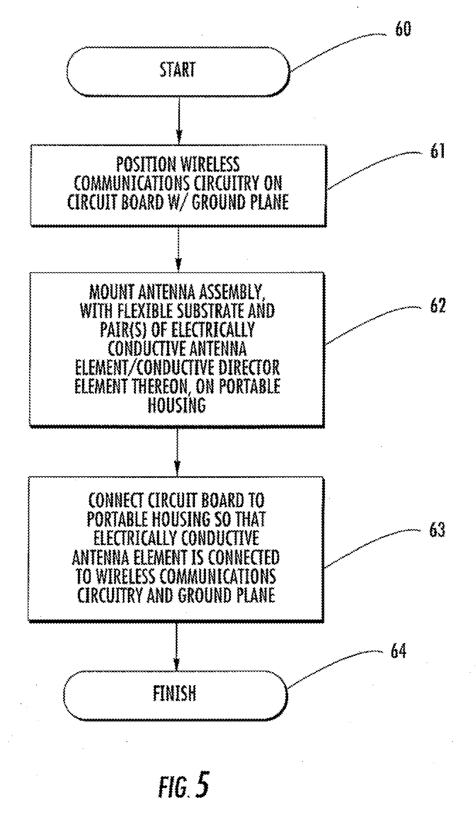

FIG. 5 is a flow diagram illustrating a method for making a mobile wireless communications device in accordance with one aspect.

FIG. 6 is a schematic block diagram illustrating exemplary components that may be included in the wireless communications device of FIG. 1.

### Detailed Description of the Preferred Embodiments

The present description is made with reference to the accompanying drawings in which preferred embodiments are shown. However many different embodiments may be used, and thus the description should not be construed as limited to the embodiments set forth herein. Rather these embodiments are provided so that this disclosure will be thorough and complete. Like numbers refer to like elements throughout.

Generally speaking, a mobile wireless communications device is disclosed herein which may include a portable housing, a circuit board carried by the portable housing and comprising a ground plane, and wireless communications circuitry carried by the circuit board. Furthermore, the device may also include an antenna assembly carried by the housing. The antenna assembly may include a flexible substrate, an electrically conductive antenna element on the flexible substrate and connected to the wireless communications circuitry and the ground plane, and at least one pair of floating, electrically conductive director elements on opposite sides of the flexible substrate for directing a beam pattern of the antenna element.

More particularly, the floating, electrically conductive director elements may be generally parallel to one another. The flexible substrate may include a wrap-around portion adjacent a bottom of the housing. Moreover, portions of the electrically conductive antenna element may be on the wrap-around portion.

In addition, the electrically conductive antenna element may include at least one loop portion. More specifically, the electrically conductive antenna element may have a generally rectangular shape with at least one slotted opening therein defining the at least one loop portion. Also, the electrically conductive antenna element may further includes a first feed point for the wireless communications circuitry and a second feed point for the ground plane.

The floating, electrically conductive director elements may have a generally elongate shape extending vertically outwardly from the electrically conductive antenna element. Further, the portable housing may have a top and bottom, and the floating, electrically conductive director elements may extend from the bottom of the portable housing toward the top. At least one of the floating, electrically conductive director elements may have a cut-out therein.

A related antenna assembly, such as the one described briefly above, and a related method for making a mobile wireless communications device are also provided. The method may include positioning wireless communications circuitry on a circuit board comprising a ground plane, and mounting an antenna assembly on a portable housing, such as the one described briefly above. The method may further include connecting the circuit board to the portable housing so that the electrically conductive antenna element is connected to the wireless communication circuitry and the ground plane.

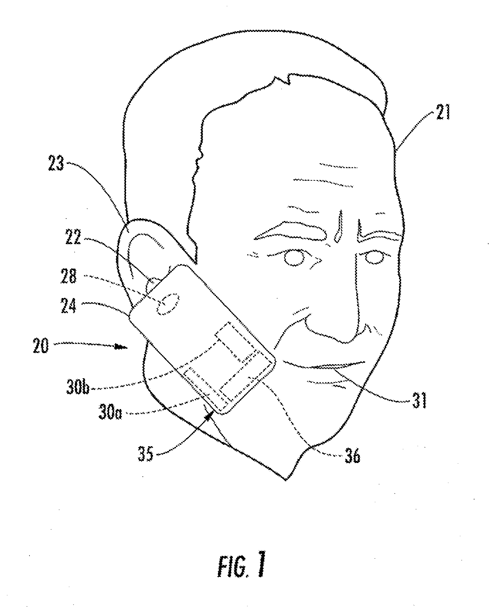

Referring initially to FIGS. 1 through 4, a mobile wireless communications device **20,** such as a cellular telephone, is for a user **21.** In some applications, the user **21** may be wearing an electronic hearing aid **22** in an ear **23** of the user. In particular, the device **20** may advantageously provide desired hearing aid compatibility (HAC) for users with hearing aids in some implementations, as will be discussed further below, but need not be used with hearing aids in all embodiments.

The devices **20** illustratively includes a portable housing **24** and an audio output transducer **28** (e.g., a speaker) carried by the housing and accessible to the electronic hearing aid **22** of the user **21** adjacent the top of the housing as shown. An audio input transducer **32** (e.g., microphone) is also carried by the housing **24** and accessible to a mouth **31** of the user **21** adjacent the bottom of the housing. Although described herein with reference to a cellular device, it should be noted that the present disclosure may be applicable to other wireless communications devices such as wireless LAN devices, etc.

The cellular telephone **20** further illustratively includes a printed circuit board (PCB) **37** carried by the housing **24** and wireless communications circuitry **38** (e.g., cellular transceiver etc.) carried by the PCB. In the illustrated embodiment, the wireless communications circuitry **38** is carried on the back on the PCB **37**, but in other embodiments it may be carried on the front side, for example. A ground plane **39** is illustratively carried on a front surface of the PCB **37,** although the ground plane may be located elsewhere in other embodiments, as will be appreciated by those skilled in the art. The device **20** may further include other components carried by the housing **24** and/or PCB **37** such as a display, battery, keypad, processing circuitry, etc., as will be discussed further below.

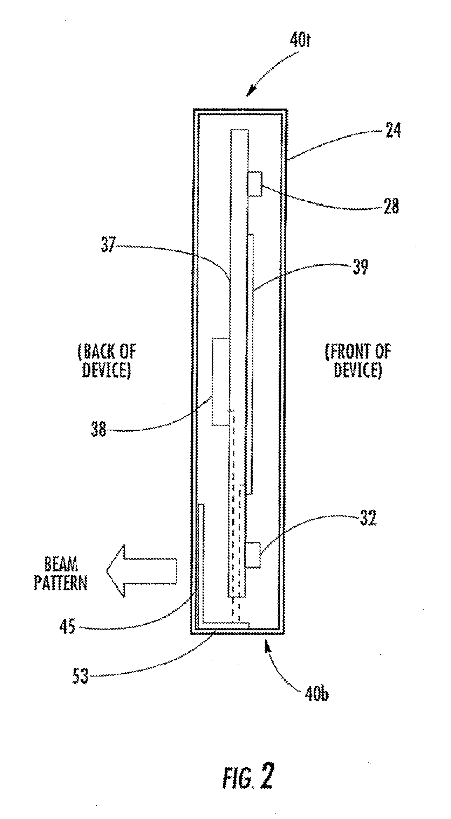

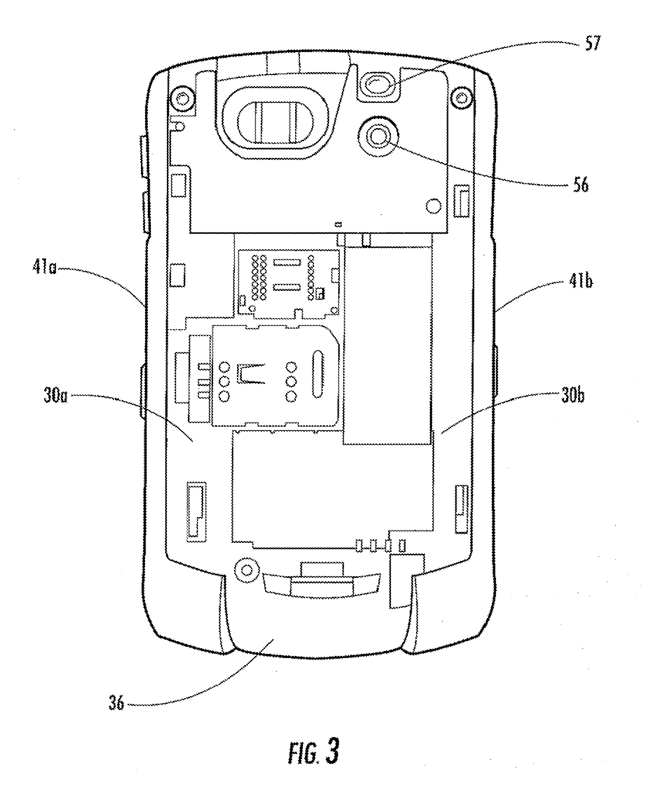

The portable housing **24** has a top **40t**, bottom **40b** (FIG. 2) and left and right sides **41a, 41b** (FIG. 3). The antenna assembly **35** is illustratively positioned adjacent the bottom **40b** of the portable housing **24** and includes a flexible substrate **45,** such as a semi-transparent dielectric ribbon, as well as an electrically conductive antenna element **36** on the flexible substrate and connected to the wireless communications circuitry **38** and the ground plane **39** (FIG. 2). By way of example, the conductive antenna element **36** may be a printed conductor which is advantageously printed on the flexible substrate **45,** which in turn is attached to the portable housing **24** by a suitable adhesive, etc. Also, the antenna element **36** may be connected to the circuitry **38** and ground plane **39** by a flex conductor, for example, or other suitable connectors. In some embodiments, portions of the antenna element **36** may be on the flexible substrate **45,** while other portions of the antenna element may be positioned elsewhere, as will be appreciated by those skilled in the art.

In the illustrated example, the antenna assembly **35** is secured to the housing **24** underneath where a battery cover (not shown) is attached to the back of the housing. That is, when the battery cover is connected to the housing **24,** it covers the antenna assembly **35** so it is not visible to a user. However, it should be noted that other placements and/or approaches for securing the antenna assembly **35** to the housing may also be used. The structure of the antenna element **36** is discussed further below.

The antenna element **36** may take the form of one or more single or multi-feed point antenna elements (monopole, inverted F, etc.), for example, as will be appreciated by those skilled in the art. In the illustrated embodiment, the antenna element **36** is a multi-band inverted F antenna which advantageously covers GSM 850/900/1800/1900 bands, although other bands (e.g., UMTS 2100 MHz) may also be used by appropriate adjustment of electrical length, etc., as will be appreciated by those skilled in the art. The antenna element **36** overall has a generally rectangular shape with one or more slotted openings **48** therein defining a loop portion **47.** In the illustrated embodiment there is a single loop portion **47,** but in other embodiments there may be multiple slotted openings defining multiple loops, as seen in related co-pending application no. 11/863,324, which is assigned to the present Assignee and is hereby incorporated herein in its entirety by reference.

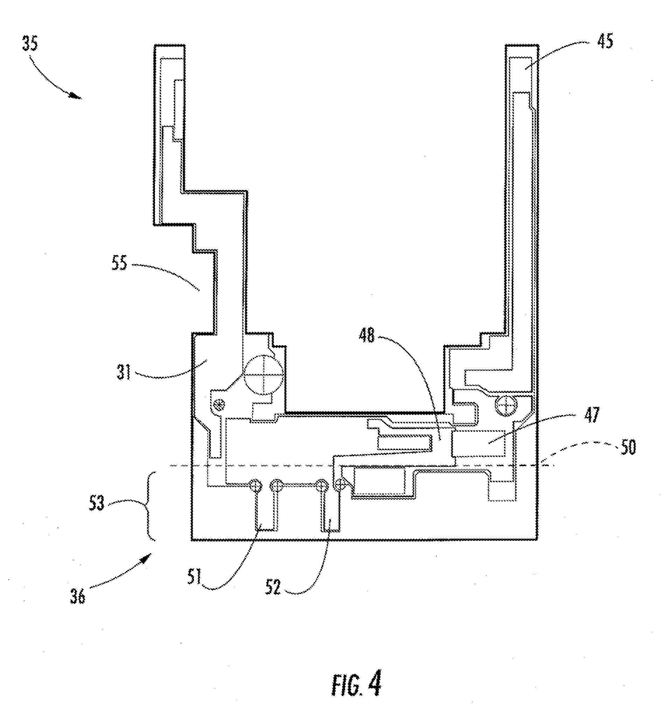

The antenna element **36** further illustratively includes a first feed point **51** that is electrically connected to the wireless communications circuitry **38,** and a second feed point **52** that is electrically connected to the ground plane **39.** Both of the first and second feed points **51, 52** are coupled or connected to the loop portion **47,** as seen in FIG. 4. In the exemplary embodiment, the flexible substrate **45** has a wrap-around portion **53,** which is the portion below the dashed line **50** (FIG. 4). More particularly, the wrap-around portion **53** wraps around or underneath the bottom **40b** of the portable housing **24.** Portions of the antenna element **36,** namely the first and second feed points **51, 52,** and lower portions of the elements, are on the wrap-around portion **53** as seen in the illustrated example, although other portions of the antenna element may also be included on the wrap-around portion (or no wrap-around portion used at all in some embodiments).

The folded, loop-back configuration of the loop **47** advantageously provides a relatively compact antenna design compared with an equivalent traditional monopole or inverted F antenna. This may advantageously provide a smaller footprint, which results in a greater surface integration area savings. By way of example, in the illustrated embodiment the antenna element **36** has a generally rectangular footprint of about 1.5 cm tall by **4** cm wide, although other sizes and dimensions may be used in different embodiments. The lengths and shapes of the loop portion **47** may advantageously be chosen to provide an effective electrical length of λ/4 of the respective operating frequencies of the antenna element **36,** as will be appreciated by those skilled in the art .

In the present example, the antenna element **36** is positioned adjacent the bottom **40b** of the PCB **37** and therefore the bottom of the housing **24** (i.e., adjacent where the input transducer **32** is). This advantageously helps reduce coupling to the electronic hearing aid **22** of the user **21** with respect to traditional top-mounted, internal cellular phone antennas. This is because the electronic hearing aid **22** of the user **21** is advantageously further separated from the antenna element **36** when the cellular telephone **20** is held adjacent the user's ear 23 than would otherwise be the case with a typical top-mounted, internal cellular telephone antenna, for example. Moreover, this antenna placement also helps space the antenna element **36** farther apart from the user's brain, which in turn helps to reduce the SAR of the device **20** again with respect to a traditional top-mounted, internal cellular phone antenna. However, it should be noted that a top-mounted or other antenna placement may be used in some embodiments.

Nonetheless, if the portable housing **24** has a relatively small form factor or footprint for user convenience, this means that the antenna **35** may still be positioned relatively close to the user's ear **23,** thus potentially elevating the SAR or coupling to the hearing aid **22** to unacceptable levels. Moreover, close proximity of the antenna element **36** to a user's head may also cause interference with a typical cellular antenna radiation pattern, for example.

As such, the antenna assembly **35** further advantageously includes one or more pairs of floating, electrically conductive director elements **30a, 30b** on the flexible substrate **45** for directing a beam pattern of the antenna element **36.** More particularly, in the illustrated configuration the director elements **30a, 30b** direct the beam pattern of the antenna element **36** away from the user, as seen in FIG. 2. This not only helps to prevent interference from blockage of the beam pattern by the user's head, but is also advantageously directs RF energy away from the user's head so that there is less coupling with the user's hearing aid **22** and/or potentially reduced device SAR, as will be appreciated by those skilled in the art. This may also advantageously help with head phantom TRP measurements, for example, as will be appreciated by those skilled in the art.

In the illustrated embodiment the director elements **30a, 30b** have a generally rectangular shape with a lower end laterally adjacent the antenna element **36**. The director element **30a** has a cut-out **55** therein (FIG. **4**). While such cut-outs may be used in the antenna elements **30a, 30b** to accommodate holes, etc. in the portable housing **24,** such cut-outs or narrowed portions may also serve to change the allowable effective length of the director element to lengths other than λ/4 of a given operating frequency (e.g., λ/2, etc.), as will be appreciated by those skilled in the art. This may advantageously provide enhanced flexibility in layout to accommodate different embodiments where different amounts of portable housing surface area **24** are available. The director element **30a** also has loop-back or meander portions, which can further be used to circumvent holes, etc., in the housing **24** and/or change the effective length of the director element. The director element **30b** generally resembles a backward "L" in the illustrated example, although other shapes are also possible.

More particularly, the director elements **30a, 30b** illustratively have elongate shapes extending vertically outwardly from the antenna element **36,** as seen in FIG. **4****.** That is, the director elements **30a, 30b** respectively extend vertically along the left side **41a** and right side **41b** of the portable housing **24** from the bottom **40b** thereof toward the top **40t,** and are generally parallel to one another in this regard. However, in other embodiments the director elements **30a, 30b** may advantageously be positioned elsewhere.

Generally speaking, it is desirable to match the director elements **30a, 30b** to the operating frequencies of the antenna element **36.** By way of example, one of the director elements **30a, 30b** may be matched to the lower frequency bands (e.g., GSM 850/900), while the other is matched to the upper frequency bands (e.g., GSM 1800/1900), although other configurations are possible in different embodiments. In the illustrated example, the director elements **30a, 30b** have overall lengths of about 4-6 cm, and widths varying from about 1 to 4 mm, although other dimensions are also possible in other dimensions.

In the illustrated example, the director elements **30a, 30b** are not on the wrap-around portion **53** of the flexible substrate **45,** although some portions of at least one of the director elements may be on the wrap-around portion in some embodiments. The flexible substrate **45** advantageously facilitates the placement of the antenna element **36** (or multiple elements in other embodiments) and director elements **30a, 30b** during manufacturing, which may avoid the potential difficulty of printing conductive traces on portions of the housing **24,** for example. Moreover, the flexible substrate **45** may be relatively easily patterned to fit numerous styles and/or sizes of housings **24.** Furthermore, the flexible substrate **45** allows the antenna element **36** to be placed in locations other than on the PCB **37,** so that the PCB surface area can be used for other elements. The flexible substrate **45** also provides for the relatively easy wrapping around the bottom **40b,** etc., of the portable housing **24.** This may therefore take advantage of potentially otherwise unused housing **24** surface area so that less of the back-side of the housing, which may need to be used for battery slots, camera lenses, etc., is required. A camera lens **56** and flash **57** are incorporated in the exemplary device **20** (FIG. 3), although these need not be included in all embodiments.

In the embodiment illustrated in FIG. 3, the director elements **30a, 30b** and the antenna element **36** are covered with a cover layer, which advantageously helps protect them so that they are not damaged or altered such that performance is potentially degraded. By way of example, the cover layer may be a dielectric tape layer, etc. One may also advantageously conceal the director elements **30a, 30b,** for example, by making the cover layer the same color as a color of the portable housing **24,** as will be appreciated by those skilled in the art.

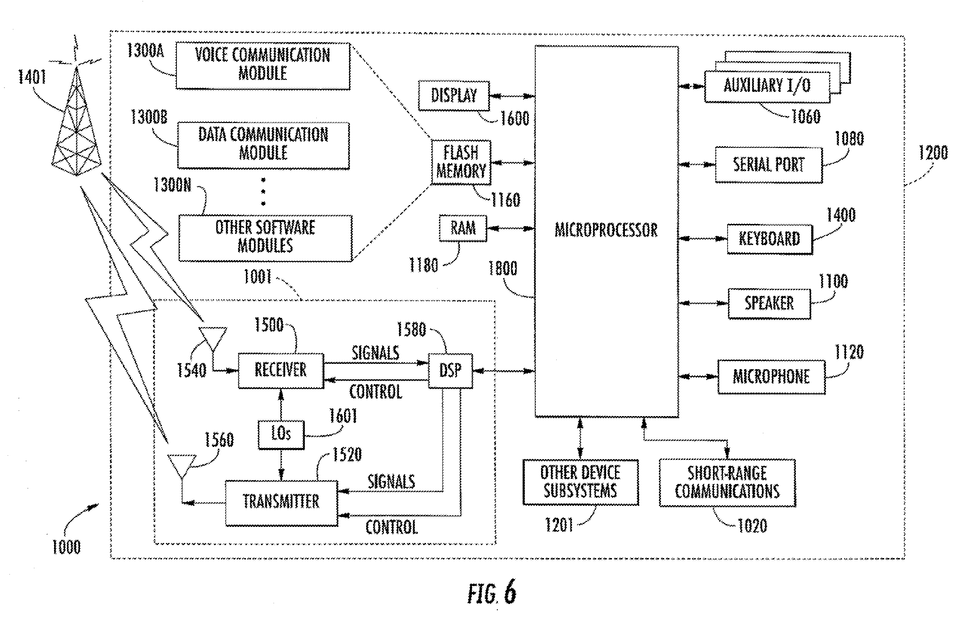

A related method for making a mobile wireless communications device **20** is now briefly described with reference to FIG. 6. Beginning at Block **60,** the method illustratively includes positioning wireless communications circuitry **38** on a circuit board **37** having a ground plane **39** thereon, at Block **61,** and mounting an antenna assembly **35,** such as the one briefly described above, on a portable housing **24** (Block **62**). The method may further include connecting the circuit board **37** to the portable housing **24** so that the electrically conductive antenna element **36** is connected to the wireless communications circuitry **38** and the ground plane **39,** at Block **63,** thus concluding the illustrated method (Block **64**).

Exemplary components that may be used in the device **20** will now be described in the following example with reference to a wireless communications device **1000** shown in FIG. 6. The device **1000** illustratively includes a housing **1200,** a keypad **1400** and an output device **1600.** The output device shown is a display **1600,** which is preferably a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user.

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 6. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** is preferably a two-way RF communications device having voice and data communications capabilities. In addition, the mobile device **1000** preferably has the capability to communicate with other computer systems via the Internet.

Operating system software executed by the processing device **1800** is preferably stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180**.

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM is preferably capable of organizing and managing data items, such as e-mail, calendar events, voice mails, appointments, and task items. The PIM application is also preferably capable of sending and receiving data items via a wireless network **1401.** Preferably, the PIM data items are seamlessly integrated, synchronized and updated via the wireless network **1401** with the device user's corresponding data items stored or associated with a host computer system.

Communication functions, including data and voice communication, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, etc.

Network access requirements vary depending upon the type of communication system. For example, in the Mobitex and DataTAC networks, mobile devices are registered on the network using a unique personal identification number or PIN associated with each devices. In GPRS networks, however, network access is associated with a subscriber or user of a device. A GPRS device therefore requires a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter 1520 for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data commmications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device user may also compose data items, such as e-mail messages, using the keypad **1400** and/or some other auxiliary I/O device **1060,** such as a touchpad, a rocker switch a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystem, such as a voice message recording subsystem, may also be implemented on the device **1000**. In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device comprising:
a portable housing;
a circuit board carried by said portable housing and comprising a ground plane;
wireless communications circuitry carried by said circuit board; and
an antenna assembly carried by said housing and comprising
a flexible substrate,
an electrically conductive antenna element on said flexible substrate and connected to said wireless communications circuitry and said ground plane, and
at least one pair of floating, electrically conductive director elements on opposite sides of said flexible substrate for directing a beam pattern of said antenna element.

2. The mobile wireless communications device of Claim 1 wherein said floating, electrically conductive director elements are generally parallel to one another.

3. The mobile wireless communications device of Claim 1 wherein said flexible substrate includes a wrap-around portion adjacent a bottom of said housing.

4. The mobile wireless communications device of Claim 3 wherein portions of said electrically conductive antenna element are on said wrap-around portion.

5. The mobile wireless communications device of Claim 1 wherein said electrically conductive antenna element comprises at least one loop portion.

6. The mobile wireless communications device of Claim 5 wherein said electrically conductive antenna element has a generally rectangular shape with at least one slotted opening therein defining the at least one loop portion.

7. The mobile wireless communications device of Claim 1 wherein said electrically conductive antenna element further comprises a first feed point for said wireless communications circuitry and a second feed point for said ground plane.

8. The mobile wireless communications device of Claim 1 wherein said floating, electrically conductive director elements have a generally elongate shape extending vertically outwardly from said electrically conductive antenna element.

9. The mobile wireless communications device of Claim 1 wherein said portable housing has a top and bottom; and wherein said floating, electrically conductive director elements extend from the bottom of said portable housing toward the top.

10. The mobile wireless communications device of Claim 1 wherein at least one of said floating, electrically conductive director elements has a cut-out therein.

11. A mobile wireless communications device comprising:
a portable housing;
a circuit board carried by said portable housing and comprising a ground plane;
wireless communications circuitry carried by said circuit board; and
an antennas assembly carried by said housing and comprising
a flexible substrate,
an electrically conductive antenna element on said flexible substrate and connected to said wireless communications circuitry and said ground plane, and
at least one pair of floating, electrically conductive director elements on opposite sides of said flexible substrate for directing a beam pattern of said antenna element,
said floating, electrically conductive director elements being generally parallel to one another and having a generally elongate shape extending vertically outwardly from said electrically conductive antenna element.

12. The mobile wireless communications device of Claim 11 wherein said flexible substrate includes a wrap-around portion adjacent a bottom of said housing.

13. The mobile wireless communications device of Claim 11 wherein said electrically conductive antenna element comprises at least one loop portion.

14. The mobile wireless communications device of Claim 11 wherein said portable housing has a top and bottom; and wherein said floating, electrically conductive director elements extend from the bottom of said portable housing toward the top.

15. An antenna assembly for a mobile wireless communications device comprising a portable housing, a circuit board carried by the portable housing and having a ground plane thereon, and wireless communications circuitry carried by the circuit board, the antenna assembly comprising:
a flexible substrate;
an electrically conductive antenna element on said flexible substrate and connected to said wireless communications circuitry and said ground plane; and
at least one pair of floating, electrically conductive director elements on opposite sides of said flexible substrate for directing a beam pattern of said antenna element.

16. The antenna assembly of Claim 14 wherein said floating, electrically conductive director elements are generally parallel.

17. The antenna assembly of Claim 14 wherein said electrically conductive antenna element comprises at least one loop portion.

18. The antenna assembly of Claim 17 wherein said electrically conductive antenna element has a generally rectangular shape with at least one slotted opening therein defining the loop portion.

19. The antenna assembly of Claim 14 wherein said floating, electrically conductive director elements have a generally elongate shape extending vertically outwardly from said electrically conductive antenna element.

20. A method for making a mobile wireless communications device comprising;
positioning wireless communications circuitry on a circuit board comprising a ground plane;
mounting an antenna assembly on a portable housing, the antenna assembly comprising
a flexible substrate,
an electrically conductive antenna element on the flexible substrate and connected to the wireless communications circuitry and the ground plane, and
at least one pair of floating, electrically conductive director elements on opposite sides of the flexible substrate for directing a beam pattern of the antenna element; and
connecting the circuit board to the portable housing so that the electrically conductive antenna element is connected to the wireless communication circuitry and the ground plane.

21. The method of Claim 20 wherein the floating, electrically conductive director elements are generally parallel.

22. The method of Claim 20 wherein the electrically conductive antenna element comprises at least one loop portion.

23. The method of Claim 20 wherein the flexible substrate includes a wrap-around portion adjacent a bottom of the housing.

24. The method of Claim 20 wherein the floating, electrically conductive director elements have a generally elongate shape extending vertically outwardly from the electrically conductive antenna element.

25. The method of Claim 20 wherein the portable housing has a top and bottom; and wherein the floating, electrically conductive director elements extend from the bottom of the portable housing toward the top.

## Amended claims

### Amended claims in accordance with Rule 137(2) EPC.

**1.** A mobile wireless communications device (20) including :
a portable housing (24);
a circuit board (37) carried by said portable housing and comprising a ground plane (39);
wireless communications circuitry (38) carried by said circuit board; and
an antenna assembly (35) positioned on a surface of said housing and comprising
a flexible substrate (45),
an electrically conductive antenna element (36) on said flexible substrate and connected to said wireless communications circuitry and said ground plane, and
at least one pair of floating, electrically conductive director elements (30a, 30b) on opposite sides of said flexible substrate (45) for directing a beam pattern of said antenna element (36).

**2.** The mobile wireless communications device (20) of Claim 1 wherein said floating, electrically conductive director elements (30a, 30b) are generally parallel to one another.

**3.** The mobile wireless communications device (20) of Claim 1 wherein said flexible substrate (45) includes a wrap-around portion (53) adjacent a bottom of said housing (24).

**4.** The mobile wireless communications device (20) of Claim 3 wherein portions of said electrically conductive antenna element (36) are on said wrap-around portion (53).

**5.** The mobile wireless communications device (20) of Claim 1 wherein said electrically conductive antenna element (36) comprises at least one loop portion (47).

**6.** The mobile wireless communications device (20) of Claim 5 wherein said electrically conductive antenna element (36) has a generally rectangular shape with at least one slotted opening (48) therein defining the at least one loop portion (47).

**7.** The mobile wireless communications device (20) of Claim 1 wherein said electrically conductive antenna element (36) further comprises a first feed point (51) for said wireless communications circuitry (38) and a second feed point (52) for said ground plane (39).

**8.** The mobile wireless communications device (20) of Claim 1 wherein said floating, electrically conductive director elements (30a, 30b) have a generally elongate shape extending vertically outwardly from said electrically conductive antenna element (36).

**9.** The mobile wireless communications device (20) of Claim 1 wherein said portable housing (24) has a top (40t) and bottom (40b); and wherein said floating, electrically conductive director elements (30a, 30b) extend from the bottom of said portable housing toward the top.

**10.** The mobile wireless communications device (20) of Claim 1 wherein at least one of said floating, electrically conductive director elements (30a, 30b) has a cut-out (55) therein.

**11.** A method for making a mobile wireless communications device (20) comprising:
positioning (61) wireless communications circuitry (38) on a circuit board (37) comprising a ground plane (39);
mounting (62) an antenna assembly (35) on a surface of a portable housing (24), the antenna assembly (35) comprising
a flexible substrate (45),
an electrically conductive antenna element (36) on the flexible substrate (45) and connected to the wireless communications circuitry (38) and the ground plane (39), and
at least one pair of floating, electrically conductive director elements (30a, 30b) on opposite sides of the flexible substrate (45) for directing a beam pattern of the antenna element (36); and
connecting (63) the circuit board (37) to the portable housing (24) so that the electrically conductive antenna element (36) is connected to the wireless communication circuitry (38) and the ground plane (39).

**12.** The method of Claim 11 wherein the floating, electrically conductive director elements (30a, 30b) are generally parallel.

**13.** The method of Claim 11 wherein the electrically conductive antenna element comprises (36) at least one loop portion (47) .

**14.** The method of Claim 11 wherein the flexible substrate (45) includes a wrap-around portion (53) adjacent a bottom of the housing (24).

**15.** The method of Claim 11 wherein the floating, electrically conductive director elements (30a, 30b) have a generally elongate shape extending vertically outwardly from the electrically conductive antenna element (36).

**16.** The method of Claim 11 wherein the portable housing has a top (40t) and bottom (40b); and wherein the floating, electrically conductive director elements (30a, 30b) extend from the bottom of the portable housing toward the top.
